# EUROPÄISCHE PATENTSCHRIFT

(11) **EP 2 804 040 B1**
(45) Veröffentlichungstag und Bekanntmachung des Hinweises auf die Patenterteilung: **21.11.2018**
(21) Anmeldenummer: 14167716.1
(22) Anmeldetag: 09.05.2014
(51) Int. Cl.: G02B 23/24, G02B 27/10, G02B 27/14, G02B 27/28

(54) **Strahlvereinigungseinrichtung für eine Lichtquelleneinrichtung**
Beam unification device for a light source device
Dispositif de concentration de rayons pour un dispositif de sources lumineuse

(30) Priorität: 17.05.2013 DE 102013105137
(43) Veröffentlichungstag der Anmeldung: 19.11.2014
(73) Patentinhaber: Karl Storz SE & Co. KG, 78532 Tuttlingen (DE)
(72) Erfinder: BAUMANN, Harald, 78532 Tuttlingen (DE); GLÖGGLER, Bernhard, 78532 Tuttlingen (DE); GÖBEL, Werner, 78532 Tuttlingen (DE)

(56) Entgegenhaltungen:
- EP-A1- 2 374 401
- WO-A2-2010/148389
- US-A1- 2006 008 237
- US-A1- 2006 119 951
- US-A1- 2009 303 707
- US-B1- 6 171 421

## Beschreibung

Die vorliegende Erfindung ist auf eine Strahlvereinigungseinrichtung zum Vereinigen von Licht einer ersten Lichtquelle und Licht einer zweiten Lichtquelle in einer Lichtquelleneinrichtung, auf eine Lichtquelleneinrichtung und auf eine medizinische Vorrichtung bezogen.

Für diagnostische, therapeutische und chirurgische medizinische Eingriffe sind in der Regel Lichtquellen zur Bereitstellung von Beleuchtungslicht und/oder von Licht zur Anregung von Fluoreszenz, zum Härten von Materialien und für andere Zwecke erforderlich. Beispielsweise bei endoskopischen Eingriffen ist die Lichtquelle in der Regel am proximalen Ende des Endoskops angeordnet oder mit diesem durch ein flexibles Lichtleitkabel verbunden. Um möglichst viel Lichtleistung bzw. einen möglichst großen Lichtfluss mittels möglichst dünner Lichtleiter übertragen zu können, ist eine Lichtquelle mit möglichst hoher Strahldichte bzw. spezifischer Intensität (engl.: radiance) L erforderlich.

Bei Endoskopen ist auch im Fall mehrerer verschiedener Lichtquellen, beispielsweise für (möglichst weißes) Beleuchtungslicht und für Licht zur Anregung von Fluoreszenz, eine Übertragung von deren Licht mittels eines einzigen Lichtleiters (insbesondere eines einzigen Bündels von Lichtleitfasern) erwünscht. Zur Strahlvereinigung bzw. zur Überlagerung von Licht mehrerer Lichtquellen werden insbesondere dichroitisch bzw. wellenlängenabhängig und/oder polarisationsabhängig reflektierende Flächen verwendet. Beispiele sind in WO 02/080803 A1, DE 10 2007 049 626 A1 und DE 10 2010 027 540 A1 beschrieben.

In US 6,171,421 B1 ist eine Strahlvereinigungseinrichtung mit einem transparenten Körper mit einer dichroitisch reflektierenden Fläche, die Licht einer Rot- und einer Grün-Lichtquelle jeweils reflektiert bzw. transmittiert, beschrieben, wobei die Lichteintrittsflächen am transparenten Körper gekrümmt sind.

In US 2006/0119951 A1 sind Vorrichtungen zum Anzeigen von Information für einen Betrachter beschrieben. Licht einer oder mehrerer Lichtquellen wird durch einen räumlichen Lichtmodulator, beispielsweise einen reflektierenden Polarisationsmodulator wie eine reflektierende Flüssigkristallanzeige, moduliert. Dabei fällt das Licht der Lichtquellen aus der Richtung auf den räumlichen Lichtmodulator, in die der räumliche Lichtmodulator das Licht - moduliert - zurück wirft. Dazu sind eine oder mehrere polarisationsabhängig reflektierende Flächen in einem Strahlteiler oder Prisma vor dem räumlichen Lichtmodulator angeordnet. Die polarisationsabhängig reflektierenden Flächen reflektieren das Licht der Lichtquellen zu dem räumlichen Lichtmodulator hin. Von dem räumlichen Lichtmodulator räumlich moduliert reflektiertes Licht wird von den polarisationsabhängig reflektierenden Flächen transmittiert soweit seine Polarisation durch den räumlichen Lichtmodulator verändert wurde.

In WO 2010/148389 A2 ist ein Lichttrichter mit einer Mantelfläche, an der das zu sammelnde, zu streuende oder zu verdichtende Licht nicht eintritt, und die eine reflektierende Beschichtung aufweist.

In EP 2 374 401 A1 ist eine Lichtquelleneinrichtung beschrieben, bei der vor einer lichtemittierenden Fläche einer Leuchtdiode ein Lichtleitkörper angeordnet ist. In dem Lichtleitkörper ist ein dichroitischer Spiegel angeordnet, um ein von einem Objektiv oder einer Gradientenindexlinse geformtes, seitlich einfallendes zweites Lichtbündel einer Laserdiode in das von der Leuchtdiode erzeugte erste Lichtbündel einzukoppeln.

In US 2009/0303707 A1 ist eine Lichtquellenvorrichtung zum Kombinieren von grünem, roten und blauem Licht dreier Lichtquellen beschrieben. Die Lichtquellenvorrichtung umfasst drei Lichtleitmedien und ein Farbkombinationsmedium. Das Farbkombinationsmedium umfasst einen dichroitischen Spiegel, der wiederum ein Farbkombinationsprisma oder ein X-Würfel sein kann. An jeder ebenen Lichteintrittsfläche des Farbkombinationsmediums ist eine Linse angeordnet.

Ein Nachteil vieler herkömmlicher Anordnungen besteht darin, dass diese wenig kompakt und/oder nicht ausreichend mechanisch robust sind, um eine Dejustage durch mechanische Stöße oder andere im praktischen Gebrauch auftretende Einflüsse ausreichend zuverlässig zu verhindern.

Eine Aufgabe der vorliegenden Erfindung besteht darin, eine verbesserte Strahlvereinigungseinrichtung, eine verbesserte Lichtquelleneinrichtung und eine verbesserte medizinische Vorrichtung mit einer Lichtquelleneinrichtung zu schaffen.

Diese Aufgabe wird durch die Gegenstände der unabhängigen Ansprüche gelöst.

Weiterbildungen sind in den abhängigen Ansprüchen angegeben.

Ausführungsformen der vorliegenden Erfindung beruhen auf der Idee, in oder an einem Körper aus einem transparentem Material eine dichroitisch bzw. wellenlängenabhängig oder polarisationsabhängig reflektierende Fläche und an dem Körper eine Lichteintrittsfläche für das Licht von einer von mehreren Lichtquellen vorzusehen. Durch eine Krümmung der Lichteintrittsfläche und/oder der dichroitisch und/oder polarisationsabhängig reflektierenden Fläche an dem Körper kann gleichzeitig eine Anpassung der Divergenz oder Konvergenz des eintretenden Lichtstrahls an weitere Erfordernisse erfolgen.

Eine Strahlvereinigungseinrichtung zum Vereinigen von Licht einer ersten Lichtquelle und Licht einer zweiten Lichtquelle einer Lichtquelleneinrichtung für eine medizinische Vorrichtung umfasst einen Körper aus einem transparenten Material, eine zumindest entweder dichroitisch oder polarisationsabhängig reflektierende Fläche in oder an dem Körper, die für Licht mit einem ersten Spektrum oder einer ersten Polarisation transparent ist und Licht mit einem zweiten Spektrum oder einer zweiten Polarisation reflektiert, und eine Lichteintrittsfläche an dem Körper, die vorgesehen und angeordnet ist, damit Licht durch die Lichteintrittsfläche in die Strahlvereinigungseinrichtung eintritt, wobei zumindest entweder die Lichteintrittsfläche oder die dichroitisch und/oder polarisationsabhängig reflektierende Fläche gekrümmt ist.

Die Strahlvereinigungseinrichtung ist insbesondere zum Vereinigen bzw. Überlagern von Licht einer ersten Lichtquelle mit einem breiten Spektrum und Licht einer zweiten Lichtquelle mit einem schmalen Spektrum vorgesehen und ausgebildet. Die Strahlvereinigungseinrichtung ist insbesondere zum Vereinigen von Licht einer ersten Lichtquelle und Licht einer zweiten Lichtquelle, die beide in einer Lichtquelleneinrichtung angeordnet sind, vorgesehen und ausgebildet, wobei die Lichtquelleneinrichtung Bestandteil eines Endoskops oder einer anderen medizinischen Vorrichtung oder mittels eines Lichtleitkabels mit einem Endoskop oder einer anderen medizinischen Vorrichtung verbindbar bzw. optisch koppelbar sein kann.

Die Strahlvereinigungseinrichtung ist insbesondere ausgebildet für eine erste Lichtquelle, die beispielsweise eine oder mehrere Leuchtdioden und optional einen oder mehrere fluoreszierende oder phosphoreszierende Materialien umfasst, um ein vom menschlichen Auge als weiß wahrgenommenes und eine möglichst gute Farbwiedergabe ermöglichendes Licht zu erzeugen. Die Strahlvereinigungseinrichtung ist insbesondere ausgebildet für eine zweite Lichtquelle die eine oder mehrere Laserdioden oder andere Laser oder schmalbandige Lichtquellen zur Anregung von Fluoreszenz für diagnostische Zwecke, zur Härtung von Materialien, zur thermischen oder photochemischen oder phototoxischen Koagulation oder Zerstörung von Gewebe oder für andere Zwecke umfasst. Alternativ kann die Strahlvereinigungseinrichtung für eine zweite Lichtquelle vorgesehen und ausgebildet sein, deren Licht dem der ersten Lichtquelle überlagert wird und dieses ergänzt, um beispielsweise die Farbwiedergabe zu verbessern. Die Strahlvereinigungseinrichtung kann für einen gleichzeitigen oder alternierenden Betrieb der ersten Lichtquelle und der zweiten Lichtquelle vorgesehen und ausgebildet sein.

Der Körper ist insbesondere für Licht im für das menschliche Auge sichtbaren Spektralbereich transparent. Der Körper ist insbesondere ferner für Licht im nahen Ultraviolett, in dem eine Anregung von Fluoreszenz zu diagnostischen Zwecken stattfinden kann, transparent. Alternativ oder zusätzlich ist der Körper für Licht im nahen Infrarot transparent. Der Körper kann einstückig ausgebildet oder aus zwei oder mehr Teilen gefügt sein.

Die dichroitisch und/oder polarisationsabhängig reflektierende Fläche kann eben oder gekrümmt sein. Die dichroitisch und/oder polarisationsabhängig reflektierende Fläche kann die Gestalt eines Ausschnitts einer Kugeloberfläche aufweisen, wobei der Mittelpunkt der Kugeloberfläche innerhalb oder außerhalb des Körpers aus dem transparenten Material liegen kann. Alternativ kann die dichroitisch und/oder polarisationsabhängig reflektierende Fläche die Gestalt eines Ausschnitts eines Rotationsellipsoids aufweisen, wobei die Symmetrieachse des Rotationsellipsoids innerhalb oder außerhalb des Körpers liegen kann und insbesondere parallel oder im Wesentlichen parallel zu einer vorgesehenen Ausbreitungsrichtung von Licht mit dem ersten Spektrum ist. Alternativ kann die dichroitisch und/oder polarisationsabhängig reflektierende Fläche die Gestalt eines Ausschnitts einer Mantelfläche eines Kreiszylinders oder eines Kegels mit kreisförmiger, elliptischer oder anderer Grundfläche aufweisen, wobei die Symmetrieachse des Kreiszylinders oder gegebenenfalls eine Symmetrieachse des Kegels innerhalb oder außerhalb des Körpers liegen kann und insbesondere parallel oder im Wesentlichen parallel oder orthogonal oder im Wesentlichen orthogonal zu einer vorgesehenen Ausbreitungsrichtung von Licht mit dem ersten Spektrum ist. Die reflektierende Fläche ist insbesondere in einem Bereich der Oberfläche des Körpers oder zwischen zwei Teilen des Körpers angeordnet. Insbesondere wird die reflektierende Fläche durch eine oder mehrere Materialschichten gebildet, die gleichzeitig zwei Teile des Körpers miteinander mechanisch verbinden.

Die reflektierende Fläche ist insbesondere für Licht innerhalb zumindest eines großen Teils des für das menschliche Auge sichtbaren Wellenlängenbereichs transparent und für Licht im violetten oder ultravioletten Wellenlängenbereich reflektierend. Dadurch kann Beleuchtungslicht einer Weißlichtquelle im Wesentlichen unbeeinflusst durch die dichroitisch reflektierende Fläche hindurchtreten, und durch die Lichteintrittsfläche in die Strahlvereinigungseinrichtung eintretendes Fluoreszenzanregungslicht durch die dichroitisch reflektierende Fläche in die gleiche Richtung umgelenkt werden, in der das weiße Licht durch die Strahlvereinigungseinrichtung hindurchtritt.

Die beschriebene Strahlvereinigungseinrichtung kann neben der Vereinigung bzw. Überlagerung von Licht zweier Lichtquellen gleichzeitig durch eine Krümmung der Lichteintrittsfläche und/oder durch eine Krümmung der dichroitisch und/oder polarisationsabhängig reflektierenden Fläche eine Veränderung und Anpassung der Divergenz oder Konvergenz des von einer der beiden Lichtquellen ausgehenden Lichts ermöglichen. Durch die Anordnung sowohl der reflektierenden Fläche als auch der Lichteintrittsfläche am gleichen transparenten Körper ist eine Dejustage - von vollständig zerstörenden Einflüssen abgesehen - ausgeschlossen. Außerdem kann die Strahlvereinigungseinrichtung sehr kompakt ausgebildet sein und damit nur geringen Bauraum beanspruchen.

Bei einer Strahlvereinigungseinrichtung, wie sie hier beschrieben ist, weist die Lichteintrittsfläche insbesondere die Gestalt eines Ausschnitts einer Mantelfläche eines Zylinders oder eines Kegels auf.

Ein Zylinder im hier gemeinten geometrischen Sinne ist ein Körper, der durch zwei ebene und parallele Flächen, die auch als Grund- und Deckfläche bezeichnet werden, und durch eine Mantel- bzw. Zylinderfläche begrenzt wird. Die Mantel- bzw. Zylinderfläche wird von parallelen Geraden, die einander entsprechende Punkte an den Rändern der ebenen Flächen verbinden, gebildet. Ein Zylinder entsteht also durch Verschiebung einer ebenen Fläche oder Kurve entlang einer Geraden, die nicht in der Ebene liegt. Grund- und Deckfläche können kreisförmig sein oder eine beliebige andere Gestalt aufweisen. Wenn die Grundfläche und die Deckfläche kreisförmig sind, ist der Zylinder ein Kreiszylinder. Wenn die die Mantel- bzw. Zylinderfläche bildendenden Geraden senkrecht zu den ebenen Flächen sind, wird der Zylinder als gerader Zylinder bezeichnet.

Mit einer Zylinderachse eines Zylinders ist hier jede Gerade gemeint, die parallel zu den Geraden, die die Mantel- bzw. Zylinderfläche bilden, ist. Die Zylinderachse gibt die Richtung an, in der der Zylinder innerhalb gewisser Grenzen translationsinvariant ist. Die Symmetrieachse eines geraden Kreiszylinders ist die Gerade, auf der die Mittelpunkte von Grund- und Deckfläche liegen. Der gerade Kreiszylinder ist rotationssymmetrisch zu dieser Symmetrieachse.

Ein Kegel oder Konus im hier gemeinten geometrischen Sinne ist ein Körper, der entsteht, wenn alle Punkte einer ebenen Grundfläche geradlinig mit einem Punkt außerhalb der Ebene verbunden werden. Der Punkt außerhalb der Ebene wird als Spitze oder Apex bezeichnet. Die Mantel- oder Kegelfläche entsteht durch geradlinige Verbindung aller Punkte des Rands der Grundfläche mit der Spitze. Der Rand bzw. die Begrenzungslinie der Grundfläche wird auch als Leitkurve bezeichnet. Die Grundfläche kann kreisförmig sein oder eine andere Gestalt aufweisen. Wenn die Grundfläche kreisförmig ist, ist der Kegel ein Kreiskegel. Wenn die Gerade durch den Mittelpunkt der Grundfläche und die Spitze senkrecht zur Grundfläche ist, ist der Kegel ein gerader Kreiskegel.

Die Kegelachse eines Kegels ist hier und im Folgenden die Gerade durch die Spitze des Kegels und durch den Flächenschwerpunkt der Grundfläche des Kegels. Ein gerader Kreiskegel ist rotationssymmetrisch zur Kegelachse.

Die Lichteintrittsfläche weist insbesondere die Gestalt eines Ausschnitts einer Mantelfläche eines Kreiszylinders oder eines Kreiskegels auf. Die Lichteintrittsfläche weist insbesondere die Gestalt einer Fläche auf, wie sie durch Schnitt der Mantelfläche des Zylinders oder Kegels mit einem weiteren Zylinder oder einem weiteren Kegel entsteht, wobei der weitere Zylinder insbesondere ein Kreiszylinder oder der weitere Kegel insbesondere ein Kreiskegel ist, und wobei die Achse des weiteren Zylinders oder des weiteren Kegels die Mantelfläche insbesondere senkrecht durchstößt.

Insbesondere wenn die Lichteintrittsfläche die Gestalt eines Ausschnitts einer Mantelfläche eines Kreiszylinders oder eines Kreiskegels mit sehr kleinem Öffnungswinkel (Winkel an der Spitze des Kegels) aufweist, wirkt die Lichteintrittsfläche auf durchtretendes Licht wie eine zylindrische Sammellinse. Dadurch kann die Lichteintrittsfläche die Divergenz eines von einer Lichtquelle ausgehenden Lichtbündels in einer Ebene senkrecht zur Zylinder- oder Kegelachse vermindern, eine Konvergenz des Lichtbündels erhöhen oder ein außerhalb des Körpers divergentes Lichtbündel innerhalb des Körpers konvergent machen. Die Lichteintrittsfläche kann damit insbesondere dazu beitragen, ein nicht-rotationssymmetrisches Lichtbündel zu verändern, an Erfordernisse anzupassen und insbesondere in ein rotationssymmetrisches oder näherungsweise rotationssymmetrisches Lichtbündel umzuformen.

Bei einer Strahlvereinigungseinrichtung, wie sie hier beschrieben ist, weist der Körper insbesondere im Wesentlichen die Gestalt eines Abschnitts eines Zylinders oder eines Kegels auf, wobei die reflektierende Fläche in oder an dem Körper angeordnet und gegenüber der Mittelachse des Körpers geneigt ist.

Der Körper weist insbesondere die Gestalt oder im Wesentlichen die Gestalt eines Abschnitts eines Kreiszylinders oder eines Kreiskegels auf. Der Körper weist insbesondere zwei ebene oder im Wesentlichen ebene Oberflächenabschnitte auf, wobei einer der ebenen Oberflächenabschnitte senkrecht zur Zylinderachse und der andere ebene Oberflächenabschnitt unter einem Winkel von 45 Grad zur Zylinderachse oder ebenfalls senkrecht zur Zylinderachse angeordnet sind. Wenn beide ebenen Oberflächenabschnitte des Körpers senkrecht zur Zylinderachse sind, ist die reflektierende Fläche insbesondere innerhalb des Körpers angeordnet, insbesondere zwischen zwei Teilen, aus denen der Körper zusammengesetzt ist. Wenn einer der beiden ebenen Oberflächenabschnitte des Körpers zur Zylinderachse geneigt ist, ist die reflektierende Fläche insbesondere an diesem geneigten Oberflächenabschnitt angeordnet oder nimmt diesen gesamten geneigten Oberflächenabschnitt ein.

Alternativ kann der Abschnitt des Zylinders oder Kegels anstelle zweier ebener Oberflächenabschnitte eine oder zwei gekrümmte Oberflächenabschnitte aufweisen.

Insbesondere weist der Körper die Gestalt einer Schnittmenge eines Prismas und eines Kreiszylinders auf, wobei das Prisma eine dreieckige Grundfläche, einen rechten Winkel und zwei 45-Grad-Winkel aufweist. Alternativ kann der Körper aus zwei Teilkörpern dieser Gestalt so zusammengesetzt, dass der gesamte Körper die Gestalt eines geraden Kreiszylinders aufweist. In diesem Fall ist die reflektierende Fläche insbesondere zwischen den beiden Teilkörpern angeordnet.

Die Mittelachse ist im Fall eines Zylinders die Zylinderachse, im Fall eines Kegels die Gerade durch Spitze und Mittelpunkt oder Flächenschwerpunkt der Grundfläche. Die reflektierende Fläche schließt mit der Mittelachse einen Winkel ein, der größer als 0 Grad ist, insbesondere mindestens 30 Grad beträgt, und der kleiner als 90 Grad ist, insbesondere höchstens 60 Grad beträgt. Insbesondere beträgt der Winkel zwischen der reflektierenden Fläche und der Mittelachse 45 Grad oder liegt im Bereich von 40 Grad bis 50 Grad. Im Fall einer ebenen Fläche ist mit dem Winkel der Winkel zwischen der Flächennormalen und der Mittelachse gemeint. Im Fall einer gekrümmten Fläche ist der Winkel zwischen der mittleren Flächennormale und der Mittelachse oder der Winkel zwischen der Flächennormale in der Mitte der Fläche (insbesondere im Flächenschwerpunkt der Fläche) und der Mittelachse gemeint.

Der Körper ist insbesondere so ausgebildet und angeordnet, dass Licht einer Lichtquelle, das von der dichroitisch oder polarisationsabhängig reflektierenden Fläche nicht reflektiert wird, durch eine ebene oder gekrümmte Endfläche des Zylinders oder Kegels eintritt, sich in dem Körper im Wesentlichen parallel zur Zylinder- bzw. Kegelachse ausbreitet und durch eine gegenüberliegende ebene oder gekrümmte Endfläche des Zylinders bzw. Kegels wieder austritt, und dass Licht einer zweiten Lichtquelle durch die Lichteintrittsfläche im Wesentlichen senkrecht zur Zylinder- bzw. Kegelachse in den Körper eintritt, an der dichroitisch oder polarisationsabhängig reflektierenden Fläche reflektiert wird und gemeinsam mit dem Licht der ersten Lichtquelle und im Wesentlichen in der gleichen Richtung an einer ebenen oder gekrümmten Endfläche des Zylinders austritt.

Bei einer Strahlvereinigungseinrichtung, wie sie hier beschrieben ist, umfasst die Strahlvereinigungseinrichtung insbesondere einen ersten Körper aus einem transparenten Material und einen zweiten Körper aus einem transparenten Material, wobei die reflektierende Fläche zwischen dem ersten Körper und dem zweiten Körper angeordnet ist, und wobei der erste Körper und der zweite Körper zusammen die Gestalt eines Abschnitts eines Zylinders oder eines Kegels aufweisen.

Insbesondere weisen der erste Körper und der zweite Körper zusammen die Gestalt eines Abschnitts eines Kreiszylinders oder eines Kreiskegels mit zwei parallelen oder im Wesentlichen parallelen, jeweils ebenen oder gekrümmten Endflächen auf, die zur Zylinderachse jeweils insbesondere senkrecht oder im Wesentlichen senkrecht sind. Eine gekrümmte Fläche ist zur Zylinderachse senkrecht, wenn ihre mittlere Flächennormale oder ihre Flächennormale in der Mitte oder im Flächenschwerpunkt der gekrümmten Fläche parallel zur Zylinderachse ist.

Bei einer Strahlvereinigungseinrichtung, wie sie hier beschrieben ist, weist die Mantelfläche des Körpers außerhalb der Lichteintrittsfläche insbesondere eine reflektierende Beschichtung auf.

Die reflektierende Beschichtung umfasst insbesondere eine Silberschicht oder eine andere metallische Schicht. Die reflektierende Beschichtung weist im Bereich der Lichteintrittsfläche eine fensterartige Öffnung auf, innerhalb derer die reflektierende Beschichtung nicht aufgebracht oder nach dem Aufbringen entfernt ist. Zur Verbesserung der Einkopplung von Licht durch die gekrümmte Lichteintrittsfläche kann in ihrem Bereich statt der reflektierenden Beschichtung eine reflexmindernde Beschichtung aufgebracht sein.

Bei einer Strahlvereinigungseinrichtung, wie sie hier beschrieben ist, ist der Körper insbesondere hergestellt, indem ein oder zwei ursprünglich dreieckig-prismatische Körper zylindrisch geschliffen werden, die vor oder nach dem Schleifen miteinander verkittet wurden.

Eine Strahlvereinigungseinrichtung, wie sie hier beschrieben ist, weist insbesondere eine weitere Lichteintrittsfläche auf, an der eine nicht abbildende optische Einrichtung zur Formung eines Lichtbündels einer Lichtquelle vorgesehen ist. Nicht abbildende Optik ist auch unter den englischen Bezeichnungen non imaging optics und anidolic optics bekannt. Mit Mitteln der nicht abbildenden Optik ist es möglich, einen besonders großen Teil der in einem Lichtbündel enthaltenen Leistung in die Strahlvereinigungseinrichtung einzukoppeln und das Lichtbündel jeweiligen Erfordernissen entsprechend zu formen.

Einer Strahlvereinigungseinrichtung, wie sie hier beschrieben ist, umfasst insbesondere ferner einen Fasertaper oder einen konzentrischen optischen Konzentrator oder einen zusammengesetzt parabolischen Konzentrator zwischen einer weiteren Lichteintrittsfläche und dem Körper.

Konzentrische optische Konzentratoren sind vor allem unter der englischen Bezeichnung concentric optical concentrator, abgekürzt coc, bekannt. Zusammengesetzte parabolische Konzentratoren sind insbesondere unter der englischen Bezeichnung compound parabolic concentrator, abgekürzt cpc, bekannt. Die weitere Lichteintrittsfläche sowie der Fasertaper oder der konzentrische optische Konzentrator oder der zusammengesetzte parabolische Konzentrator sind insbesondere zum Einkoppeln von weißem oder dem menschlichen Auge im Wesentlichen weiß erscheinenden Licht einer oder mehrerer Leuchtdioden oder einer anderen breitbandigen Lichtquelle vorgesehen.

Eine Strahlvereinigungseinrichtung, wie sie hier beschrieben ist, umfasst ferner insbesondere einen Mischer zur Homogenisierung der Verteilung von Licht der ersten Lichtquelle und von Licht der zweiten Lichtquelle.

Der Mischer weist insbesondere die Gestalt eines langen Stabs aus Glas oder einem anderen transparenten Material auf. Der Mischer kann mit dem Körper in oder an dem die reflektierende Fläche und die Lichteintrittsfläche vorgesehen sind, gefügt oder mit ihm oder mit einem Teil des Körpers einstückig gefertigt sein. Der Mischer ist insbesondere kreiszylindrisch. Die Mantelfläche des Mischers ist insbesondere mit einer reflektierenden Beschichtung versehen. Die Länge des Mischers beträgt insbesondere mindestens die Hälfte des Quotienten aus seinem Durchmesser und dem Tangens des Divergenzwinkels, wobei der Divergenzwinkel der größte Winkel zwischen zwei in den Mischer eintretenden Lichtstrahlen innerhalb des zu homogenisierenden Lichtbündels ist.

Durch mehrfache Reflexion fast aller Lichtstrahlen innerhalb des Lichtbündels an der langen Mantelfläche des dünnen Mischers kann eine weitgehende Homogenisierung der Intensität sowie der Strahldichte erreicht werden, und zwar sowohl des Lichts der ersten Lichtquelle als auch des Lichts der zweiten Lichtquelle.

Eine Lichtquelleneinrichtung für eine medizinische Vorrichtung umfasst eine erste Lichtquelle zum Erzeugen von Licht mit einem ersten Spektrum, eine zweite Lichtquelle zum Erzeugen von Licht mit einem zweiten Spektrum und eine Strahlvereinigungseinrichtung, wie sie hier beschrieben ist.

Die erste Lichtquelle ist insbesondere eine breitbandige Lichtquelle. Die erste Lichtquelle umfasst insbesondere eine oder mehrere anorganische oder organische Leuchtdioden, eine RGB-Leuchtdiode und optional ein oder mehrere phosphoreszierende oder fluoreszierende Materialien. Die erste Lichtquelle ist insbesondere ausgebildet, um Licht zu erzeugen, das vom menschlichen Auge als weiß oder näherungsweise weiß wahrgenommen wird und eine möglichst gute Farbwiedergabe ermöglicht.

Die zweite Lichtquelle ist insbesondere eine schmalbandige Lichtquelle. Die zweite Lichtquelle umfasst insbesondere eine oder mehrere Laserdioden oder andere Laser zur Erzeugung von Licht zur Anregung von Fluoreszenz, zur thermischen oder fotochemischen oder fototoxischen Koagulation oder Schädigung oder Zerstörung von Gewebe, zur Härtung eines Materials, zur Ergänzung des Spektrums der ersten Lichtquelle und damit zur Verbesserung der Farbwiedergabe oder für einen anderen Zweck.

Insbesondere werden das Licht der zweiten Lichtquelle über die gekrümmte Lichteintrittsfläche in die Strahlvereinigungseinrichtung eingekoppelt und an der dichroitisch oder polarisationsabhängig reflektierenden Fläche derselben reflektiert und das Licht der ersten Lichtquelle über die oben ebenfalls bereits erwähnte weitere Lichteintrittsfläche in die Strahlvereinigungseinrichtung eingekoppelt, wobei das Licht der ersten Lichtquelle durch die dichroitisch oder polarisationsabhängig reflektierende Fläche hindurchtritt.

Bei einer Lichtquelleneinrichtung, wie sie hier beschrieben ist, bei der der Körper aus einem transparenten Material die Gestalt eines Abschnitts eines Zylinders aufweist, ist die zweite Lichtquelle insbesondere gegenüber der Lichteintrittsfläche angeordnet und ausgebildet, um ein Lichtbündel zu emittieren, dessen Divergenz in Richtung senkrecht zur Zylinderachse breiter ist als in Richtung parallel zur Zylinderachse.

Insbesondere Laserdioden erzeugen oft ein Lichtbündel, das ausgeprägt elliptisch oder auf andere Weise nicht-rotationssymmetrisch ist. Die Richtung senkrecht zum Lichtbündel, in der das Lichtbündel maximal divergent ist, wird auch als fast axis bezeichnet. Die Richtung senkrecht zum Lichtbündel, in der die Divergenz des Lichtbündels minimal ist, wird auch als slow axis bezeichnet. Eine konvex zylindrisch gekrümmte Lichteintrittsfläche für das Lichtbündel einer Laserdiode, die so angeordnet ist, dass die slow axis parallel zur Zylinderachse ist, kann die Divergenz in Richtung senkrecht zur Zylinderachse reduzieren. Damit kann die zylindrisch gekrümmte Lichteintrittsfläche das von der Laserdiode erzeugte Lichtbündel so beeinflussen, dass es einem rotationssymmetrischen Lichtbündel ähnlicher wird.

Eine Lichtquelleneinrichtung, wie sie hier beschrieben ist, umfasst ferner insbesondere eine lichtbrechende Einrichtung zwischen der zweiten Lichtquelle und der Lichteintrittsfläche der Strahlvereinigungseinrichtung, zum Verändern der Divergenz eines von der ersten Lichtquelle erzeugten Lichtbündels.

Bei einer Lichtquelleneinrichtung, wie sie hier beschrieben ist, kann die lichtbrechende Einrichtung eine konkave Zylinderlinse umfassen, die die Divergenz eines von der ersten Lichtquelle ausgehenden Lichtbündels in Richtung parallel zur Zylinderachse der Lichteintrittsfläche erhöht.

Die Zylinderachse der konkaven Zylinderlinse ist dazu insbesondere senkrecht zu einem von der zweiten Lichtquelle ausgehenden Lichtbündel und senkrecht zur Zylinderachse der Lichteintrittsfläche des Körpers aus dem transparenten Material angeordnet.

Eine lichtbrechende Einrichtung, insbesondere eine konkave Zylinderlinse, wie sie hier beschrieben ist, kann dazu beitragen, ein von der zweiten Lichtquelle erzeugtes Lichtbündel in einer erwünschten Weise umzuformen, insbesondere in Richtung zu einer erhöhten Rotationssymmetrie.

Eine medizinische Vorrichtung umfasst eine Lichtquelleneinrichtung, wie sie hier beschrieben ist.

Die medizinische Vorrichtung ist beispielsweise ein Endoskop, an dessen proximalen Ende die Lichtquelleneinrichtung angeordnet sein kann. Alternativ ist die medizinische Vorrichtung beispielsweise dazu ausgebildet, Licht zu erzeugen und mittels eines flexiblen Lichtleitkabels mit einem Endoskop gekoppelt zu werden, um Licht für das Endoskop bereitzustellen.

### Kurzbeschreibung der Figuren

Nachfolgend werden Ausführungsformen anhand der beigefügten Figuren näher erläutert. Es zeigen:
- Figur 1: eine schematische Darstellung eines Endoskops mit einer Lichtquelleneinrichtung;
- Figur 2: eine schematische Darstellung eines weiteren Endoskops mit einer Lichtquelleneinrichtung;
- Figur 3: eine schematische Schnittdarstellung einer Strahlvereinigungseinrichtung;
- Figur 4: eine weitere schematische Schnittdarstellung der Strahlvereinigungseinrichtung aus Figur 3;
- Figur 5: eine schematische Schnittdarstellung einer weiteren Strahlvereinigungseinrichtung;
- Figur 6: eine schematische Schnittdarstellung einer weiteren Strahlvereinigungseinrichtung;
- Figur 7: eine schematische Schnittdarstellung einer weiteren Strahlvereinigungseinrichtung;
- Figur 8: eine schematische Schnittdarstellung einer weiteren Strahlvereinigungseinrichtung.

### Beschreibung der Ausführungsformen

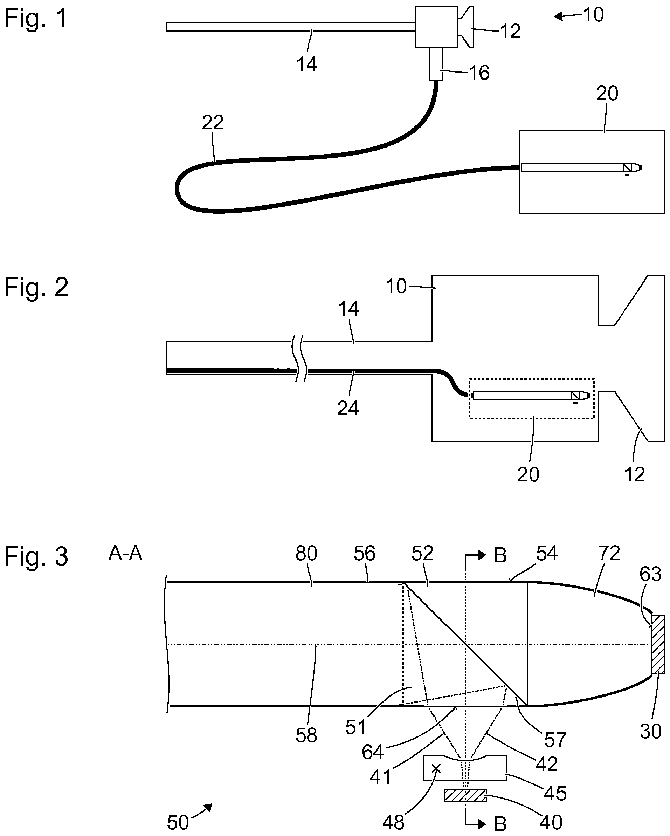

Figur 1 zeigt eine schematische Darstellung eines Endoskops 10 für medizinische oder technische oder andere nicht-medizinische Anwendungen und eine Lichtquelleneinrichtung 20 für das Endoskop 10. Das Endoskop 10 umfasst ein Okular 12 am proximalen Ende und einen geraden oder gekrümmten, starren oder flexiblen Schaft 14. Am proximalen Ende des Endoskops 10 ist ferner eine Kupplung 16 zum Verbinden des Endoskops 10 mit der Lichtquelleneinrichtung 20 mittels eines flexiblen Lichtleitkabels 22 vorgesehen. Die Lichtquelleneinrichtung 20 ist ausgebildet, um alternativ oder gleichzeitig vom menschlichen Auge als weiß empfundenes und eine möglichst gute Farbwiedergabe ermöglichendes Beleuchtungslicht und zur Anregung von Fluoreszenz geeignetes Fluoreszenzanregungslicht zu erzeugen. Dazu weist die Lichtquelleneinrichtung 20 zwei Lichtquellen und eine Strahlvereinigungseinrichtung auf, die unten mit Bezug auf die Figuren 3 bis 6 beschrieben sind.

Figur 2 zeigt eine schematische Darstellung eines weiteren Endoskops 10 für medizinische, technische oder andere nicht-medizinische Anwendungen, das in einigen Merkmalen dem oben anhand der Figur 1 dargestellten Endoskop ähnelt. Nachfolgend sind lediglich Merkmale und Eigenschaften beschrieben, in denen sich das Endoskop 10 von dem oben anhand der Figur 1 dargestellten Endoskop unterscheidet.

Das Endoskop 10 unterscheidet sich von dem oben anhand der Figur 1 dargestellten Endoskop insbesondere dadurch, dass es nicht auf eine externe Lichtquelleneinrichtung angewiesen ist und deshalb insbesondere auch keine Kupplung für ein Lichtleitkabel aufweist. Stattdessen ist eine Lichtquelleneinrichtung 20 im Endoskop 10 und insbesondere nahe dem proximalen Ende des Endoskops 10 angeordnet. Die Lichtquelleneinrichtung weist ähnlich wie die oben anhand der Figur 1 dargestellte Lichtquelleneinrichtung zwei Lichtquellen und eine Strahlvereinigungseinrichtung 50 auf. Die Lichtquelleneinrichtung 20 ist über einen Lichtleiter 24 im Schaft 14 des Endoskops 10 mit dem distalen Ende des Endoskops 10 verbunden, wo Licht der Lichtquelleneinrichtung 20 austreten kann, um ein zu beobachtendes Objekt zu beleuchten.

Figur 3 zeigt eine schematische Schnittdarstellung zweier Lichtquellen 30, 40 und einer Strahlvereinigungseinrichtung 50, die Bestandteile einer Lichtquelleneinrichtung 20, wie sie oben anhand der Figur 1 oder 2 dargestellt ist, sein können. Die Strahlvereinigungseinrichtung 50 umfasst einen ersten transparenten Körper 51 und einen zweiten transparenten Körper 52, die in der dargestellten Schnittebene jeweils einen gleichschenklig und rechtwinklig dreieckigen Querschnitt aufweisen. Zwischen den transparenten Körpern 51, 52 ist eine dichroitisch reflektierende Fläche 57 angeordnet. Die dichroitisch reflektierende Fläche 57 ist insbesondere eben. Alternativ kann die dichroitisch reflektierende Fläche 57 gekrümmt sein.

Ferner umfasst die Strahlvereinigungseinrichtung 50 einen zusammengesetzt parabolischen Konzentrator 72 zwischen der ersten Lichtquelle 30 und dem zweiten transparenten Körper 52. Ferner umfasst die Strahlvereinigungseinrichtung 50 einen Mischer 80 in Gestalt eines langen geraden Stabs aus einem transparenten Material. Durch eine gestrichelte Line zwischen dem ersten transparenten Körper 51 und dem Mischer 80 ist angedeutet, dass der erste transparente Körper 51 und der Mischer 80 einstückig hergestellt oder nach einer separaten Herstellung gefügt sein können.

Die transparenten Körper 51, 52 und der Mischer 80 weisen zusammen im Wesentlichen die Gestalt eines Kreiszylinders mit einer Mantelfläche 54 und einer Zylinderachse 58 auf. Der zusammengesetzt parabolische Konzentrator 72 ist rotationssymmetrisch zur Zylinderachse 58. Die Mantelfläche 54 des durch die transparenten Körper 51, 52 und den Mischer 80 gebildeten Kreiszylinders und die Mantelfläche des zusammengesetzt parabolischen Konzentrators 72 sind mit einer reflektierenden Beschichtung bzw. einer Verspiegelung 56 versehen, die insbesondere eine aufgedampfte Silberschicht umfasst.

Die Kontur des in Figur 3 gezeigten Querschnitts des zusammengesetzt parabolischen Konzentrators 72 umfasst zwei symmetrisch angeordnete Abschnitte zweier Parabeln, deren Achsen nicht parallel zur Zylinderachse 58 sein müssen. Der zusammengesetzt parabolische Konzentrator 72 ist ausgebildet, um einen möglichst hohen Anteil des von der ersten Lichtquelle 30 erzeugten Lichts mit einer möglichst kleinen Winkelverteilung in den zweiten Körper 52 einzukoppeln.

Die Zylinder- und Rotationssymmetrie der Strahlvereinigungseinrichtung 50 wird durch die dichroitisch reflektierende Fläche 57 zwischen den transparenten Körpern 51, 52 und durch eine Lichteintrittsfläche 64 am ersten transparenten Körper 51 gebrochen. Im Bereich der Lichteintrittsfläche 64 weist die reflektierende Beschichtung 56 eine fensterförmige Öffnung auf. Insbesondere ist im Bereich der Lichteintrittsfläche 64 anstelle der reflektierenden Beschichtung 56 eine reflexmindernde Beschichtung vorgesehen, die eine möglichst verlustarme Einkopplung von Licht in den ersten Körper 51 ermöglicht.

Die erste Lichtquelle 30 umfasst insbesondere eine oder mehrere Leuchtdioden und optional zusätzlich ein oder mehrere fluoreszierende oder phosphoreszierende Materialien, um ein vom menschlichen Auge als weiß oder näherungsweise weiß empfundenes und eine möglichst gute Farbwiedergabe ermöglichendes Beleuchtungslicht zu erzeugen. Die erste Lichtquelle 30 ist an einer Lichteintrittsfläche 63 am zusammengesetzt parabolischen Konzentrator 72 angeordnet, und mit dieser insbesondere durch einen transparenten Kitt verbunden oder auf andere Weise gefügt. Die erste Lichtquelle 30 ist so ausgebildet und angeordnet, dass von ihr erzeugtes Beleuchtungslicht sich im Mittel parallel zur Zylinderachse 58 ausbreitet. Die dichroitisch reflektierende Fläche 57 ist ausgebildet, um für das Licht der ersten Lichtquelle 30 einen möglichst hohen Transmissionsgrad und einen möglichst geringen Reflexionsgrad aufzuweisen.

Die zweite Lichtquelle 40 ist insbesondere eine Laserdiode zum Erzeugen von Fluoreszenzanregungslicht innerhalb eines schmalen Wellenlängenbereichs im Violetten oder im nahen Ultravioletten. Die Laserdiode 40 ist angeordnet, um ein Lichtbündel in einer Richtung senkrecht zur Zylinderachse 58 zu emittieren. Die Mitte des von der Laserdiode 40 emittierten Lichtbündels und die Zylinderachse 58 liegen in der Zeichenebene der Figur 3.

Zwischen der Laserdiode 40 und der Lichteintrittsfläche 64 an der Strahlvereinigungseinrichtung 50 ist optional eine Zylinderlinse 45 mit einer konkaven Oberfläche angeordnet. Die Zylinderachse 48 der Zylinderlinse 45, entlang derer die Zylinderlinse 45 im Wesentlichen translationsinvariant ist und zu der die in Figur 3 sichtbaren Oberflächen der Zylinderlinse 45 parallel sind, ist senkrecht zur Zeichenebene der Figur 3 und senkrecht zur Zylinderachse 58 der Strahlvereinigungseinrichtung 50. Die Zylinderlinse 45 vergrößert die ursprünglich geringe Divergenz des von der Laserdiode 40 erzeugten Lichtbündels in der Zeichenebene der Figur 3. In Richtung senkrecht zur Zeichenebene der Figur 3 beeinflusst die Zylinderlinse 45 die Divergenz des von der Laserdiode 40 erzeugten Lichtbündels nicht. Zur Illustration und rein schematisch sind Ränder 41, 42 des von der Laserdiode erzeugten Lichtbündels in Figur 3 angedeutet.

Die dichroitisch reflektierende Fläche 57 ist unter 45-Grad-Winkeln zur Zylinderachse 58 der Strahlvereinigungseinrichtung 50 und zur Richtung des von der Laserdiode 40 erzeugten Lichtbündels angeordnet. Die dichroitisch reflektierende Fläche 57 ist ausgebildet, um bezogen auf das von der Laserdiode 40 erzeugte Spektrum einen möglichst hohen Reflexionsgrad und einen möglichst geringen Transmissionsgrad aufzuweisen. Ein von der Laserdiode 40 erzeugtes Lichtbündel wird von der Zylinderlinse 45 in der Zeichenebene der Figur 3 aufgeweitet, tritt durch die Lichteintrittsfläche 64 in den ersten transparenten Körper 51 ein, wird an der dichroitisch reflektierenden Fläche 57 reflektiert und breitet sich danach im Mittel parallel zur Zylinderachse 58 der Strahlvereinigungseinrichtung 50 aus. Damit breiten sich das Licht der ersten Lichtquelle 30 und das Licht der Laserdiode 40 lichtstromabwärts der dichroitisch reflektierenden Fläche 57 gemeinsam und im Wesentlichen parallel zur Zylinderachse 58 der Strahlvereinigungseinrichtung 50 aus. Durch überwiegend mehrfache oder vielfache Reflexion an der reflektierenden Beschichtung 56, insbesondere im Mischer 80, wird eine näherungsweise homogene bzw. über den Querschnitt konstante Intensität und Strahldichte sowohl des Lichts der ersten Lichtquelle 30 als auch des Lichts der Laserdiode 40 erzeugt.

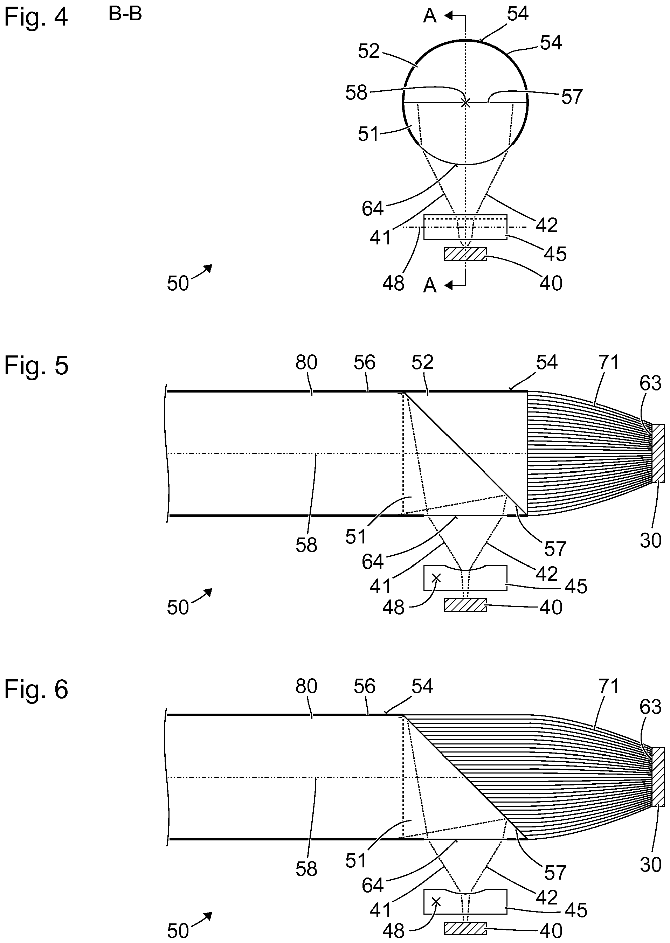

Figur 4 zeigt eine weitere schematische Schnittdarstellung der Laserdiode 40 und der Strahlvereinigungseinrichtung 50 aus Figur 3. Die Schnittebene B-B der Figur 4 ist senkrecht zur Schnittebene A-A der Figur 3, senkrecht zur Zylinderachse 58 der Strahlvereinigungseinrichtung 50, parallel zur Zylinderachse 48 der Zylinderlinse 45 und enthält die Mitte des von der Laserdiode 40 erzeugten Lichtbündels. Die Lage der Schnittebene A-A der Figur 3 ist in Figur 4 angedeutet. Die Lage der Schnittebene B-B ist in Figur 3 angedeutet.

In Figur 4 sind der im Wesentlichen kreisförmige Querschnitt, den der erste transparente Körper 51 und der zweite transparente Körper 52 zusammen aufweisen, und die reflektierende Beschichtung 56 der Mantelfläche 54 im Bereich außerhalb der Lichteintrittsfläche 64 erkennbar.

In Figur 4 ist angedeutet, dass das von der Laserdiode 40 erzeugte Lichtbündel in der Schnittebene B-B der Figur 4 eine Divergenz aufweist, die von der Zylinderlinse 45 zumindest nach dem Austritt des Lichts aus der Zylinderlinse 45 nicht beeinflusst ist. In Figur 4 ist ferner angedeutet, dass die Divergenz des von der Laserdiode 40 erzeugten Lichtbündels in der Schnittebene B-B größer ist als in der Schnittebene A-A der Figur 3. Die Krümmung der Lichteintrittsfläche 64 in der Schnittebene B-B der Figur 4 wirkt die Divergenz des von der Laserdiode 40 erzeugten Lichtbündels verringernd. Die gekrümmte Lichteintrittsfläche 64 trägt somit zur Umformung des ursprünglich ausgeprägt nichtrotationssymmetrischen Querschnitts des von der Laserdiode 40 erzeugten Lichtbündels, zur Annäherung des Querschnitts des Lichtbündels an eine Rotationssymmetrie und zur Anpassung des Lichtbündels an das von der ersten Lichtquelle (vgl. Figur 3) erzeugte Lichtbündel bei.

Figur 5 zeigt eine schematische Schnittdarstellung einer weiteren Ausführungsform einer ersten Lichtquelle 30, einer zweiten Lichtquelle 40 und einer Strahlvereinigungseinrichtung 50, die Bestandteil einer Lichtquelleneinrichtung 20, wie sie oben anhand der Figur 1 oder 2 dargestellt ist, sein können. Die Schnitt- und Zeichenebene der Figur 5 entspricht der Schnitt- und Zeichenebene A-A der Figur 3.

Die Ausführungsform der Figur 5 ähnelt in einigen Merkmalen und Eigenschaften der Ausführungsform der Figuren 3 und 4. Nachfolgend sind lediglich Merkmale und Eigenschaften beschrieben, in denen sich die Ausführungsform der Figur 5 von der oben anhand der Figuren 3 und 4 dargestellten Ausführungsform unterscheiden.

Die Ausführungsform der Figur 5 unterscheidet sich von der oben anhand der Figuren 3 und 4 dargestellten Ausführungsform insbesondere dadurch, dass anstelle eines zusammengesetzt parabolischen Konzentrators ein Fasertaper 71 vorgesehen ist. Die erste Lichtquelle 30 ist an der Lichteintrittsfläche 63 des Fasertapers 71 angeordnet und mit dieser insbesondere mittels eines transparenten Kitts gefügt. Die Lichtaustrittsfläche des Fasertapers 72 ist mit einer Lichteintrittsfläche des zweiten transparenten Körpers 52 gefügt.

Figur 6 zeigt eine schematische Schnittdarstellung einer weiteren Ausführungsform einer ersten Lichtquelle 30, einer zweiten Lichtquelle 40 und einer Strahlvereinigungseinrichtung 50, die Bestandteile einer Lichtquelleneinrichtung 20, wie sie oben anhand der Figur 1 oder 2 dargestellt ist, sein können. Die Schnitt- und Zeichenebene der Figur 6 entspricht der Schnitt- und Zeichenebene A-A der Figur 3 und der Schnitt- und Zeichenebene der Figur 5.

Die Ausführungsform der Figur 6 ähnelt in einigen Merkmalen und Eigenschaften den Ausführungsformen der Figuren 3 bis 5. Nachfolgend sind lediglich Merkmale und Eigenschaften beschrieben, in denen sich die Ausführungsform der Figur 6 von der Ausführungsform der Figur 5 unterscheidet.

Die Ausführungsform der Figur 6 unterscheidet sich von der oben anhand der Figur 5 dargestellten Ausführungsform insbesondere dadurch, dass nur der erste transparente Körper 51, in dem sich von der Laserdiode 40 ausgehendes Licht vor und nach der Reflexion an der dichroitisch reflektierenden Fläche 57 ausbreitet, vorgesehen ist. Anstelle des zweiten transparenten Körpers 52 ist der Fasertaper 71 lichtstromabwärts bis zu der dichroitisch reflektierenden Fläche 57 verlängert und unmittelbar oder - abweichend von der Darstellung in Figur 6 - mittelbar über eine dünne transparente Schicht mit der dichroitisch reflektierenden Fläche 57 verbunden.

Bei den oben anhand der Figuren 1 bis 6 dargestellten Ausführungsbeispielen kann die Vereinigung bzw. Überlagerung der Lichtbündel zweier Lichtquellen 30, 40 alternativ oder zusätzlich weitere Gründe haben. Insbesondere kann die zweite Lichtquelle 40 zur Ergänzung des Spektrums der ersten Lichtquelle 30 und zur Verbesserung der erzielbaren Farbwiedergabe vorgesehen und ausgebildet sein. Ferner kann das Licht der zweiten Lichtquelle 40 alternativ oder zusätzlich für andere Funktionen oder Wirkungen vorgesehen sein. Ferner können die Funktionen der Lichtquellen 30, 40 vertauscht sein. Die strahlformende Wirkung der gekrümmten Lichteintrittsfläche 64 ist dabei besonders vorteilhaft, wenn die zugeordnete Lichtquelle 40 ein nicht-rotationssymmetrisches Lichtbündel erzeugt und am Ausgang der Strahlvereinigungseinrichtung 50 eine möglichst symmetrische Lichtverteilung vorliegen soll.

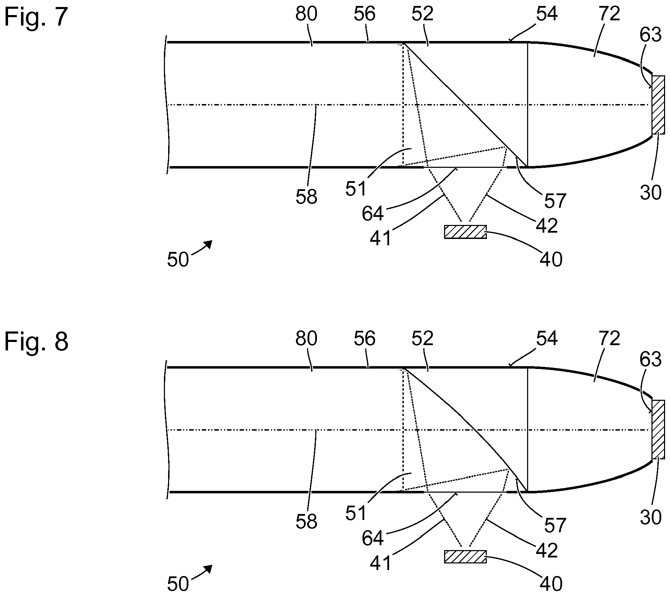

Figur 7 zeigt eine schematische Schnittdarstellung einer weiteren Ausführungsform einer ersten Lichtquelle 30, einer zweiten Lichtquelle 40 und einer Strahlvereinigungseinrichtung 50, die Bestandteile einer Lichtquelleneinrichtung 20, wie sie oben anhand der Figur 1 oder 2 dargestellt ist, sein können. Die Schnitt- und Zeichenebene der Figur 7 entspricht der Schnitt- und Zeichenebene A-A der Figur 3 und den Schnitt- und Zeichenebenen der Figuren 5 und 6.

Die Ausführungsform der Figur 7 ähnelt in einigen Merkmalen und Eigenschaften den Ausführungsformen der Figuren 3 bis 6. Nachfolgend sind lediglich Merkmale und Eigenschaften beschrieben, in denen sich die Ausführungsform der Figur 7 von der Ausführungsform der Figur 3 unterscheidet.

Die Ausführungsform der Figur 7 unterscheidet sich von der oben anhand der Figur 3 dargestellten Ausführungsform insbesondere dadurch, dass zwischen der Laserdiode 40 und der Lichteintrittsfläche 64 der Strahlvereinigungseinrichtung 50 keine Zylinderlinse vorgesehen ist. Abweichend von der Darstellung in Figur 6 kann die Strahlvereinigungseinrichtung 50 ähnlich wie oben anhand der Figuren 5 und 6 dargestellt ausgebildet sein. Anders ausgedrückt können die Ausführungsformen der Figuren 5 und 6 ähnlich wie die Ausführungsform der Figur 7 ohne eine Zylinderlinse ausgebildet sein.

Figur 8 zeigt eine schematische Schnittdarstellung einer weiteren Ausführungsform einer ersten Lichtquelle 30, einer zweiten Lichtquelle 40 und einer Strahlvereinigungseinrichtung 50, die Bestandteile einer Lichtquelleneinrichtung 20, wie sie oben anhand der Figur 1 oder 2 dargestellt ist, sein können. Die Schnitt- und Zeichenebene der Figur 8 entspricht der Schnitt- und Zeichenebene A-A der Figur 3 und den Schnitt- und Zeichenebenen der Figuren 5 bis 7.

Die Ausführungsform der Figur 8 ähnelt in einigen Merkmalen und Eigenschaften den Ausführungsformen der Figuren 3 bis 7. Nachfolgend sind lediglich Merkmale und Eigenschaften beschrieben, in denen sich die Ausführungsform der Figur 8 von der Ausführungsform der Figur 7 unterscheidet.

Die Ausführungsform der Figur 8 unterscheidet sich von der oben anhand der Figur 7 dargestellten Ausführungsform insbesondere dadurch, dass die dichroitisch und/oder polarisationsabhängig reflektierende Fläche 57 gekrümmt ist. Die reflektierende Fläche 57 weist insbesondere die Gestalt eines Ausschnitts einer Kugeloberfläche einer Oberfläche eines Rotationsellipsoids, eines Rotationsparaboloids, eines Kreiszylinders, eines anderen Zylinders oder eines Kegels mit kreisförmiger, elliptischer oder anderer Grundfläche auf. Dabei kann der Mittelpunkt der Kugel oder die Rotationsachse des Rotationsellipsoids, des Rotationsparaboloids, des Kreiszylinders, des anderen Zylinders oder gegebenenfalls des Kegels innerhalb oder außerhalb des ersten transparenten Körpers 51 oder des zweiten transparenten Körpers 52 liegen. Die Rotationsachse des Rotationsellipsoids, des Rotationsparaboloids, des Kreiszylinders, des anderen Zylinders oder gegebenenfalls des Kegels ist insbesondere parallel oder orthogonal zur Zylinderachse 58 der Strahlvereinigungseinrichtung 50.

Abweichend von der Darstellung in Figur 8 kann ähnlich wie oben anhand der Figuren 3 bis 6 dargestellt eine Zylinderlinse zwischen der Laserdiode 40 und der Lichteintrittsfläche 64 der Strahlvereinigungseinrichtung 50 vorgesehen sein.

Ferner kann die Strahlvereinigungseinrichtung 50 abweichend von der Darstellung in Figur 8, einen Fasertaper aufweisen und insofern ähnlich wie oben anhand der Figur 5 oder ähnlich wie oben anhand der Figur 6 dargestellt ausgebildet sein. Anders ausgedrückt kann bei den Ausführungsformen der Figuren 5 und 6 ähnlich wie bei der Ausführungsform der Figur 8 die dichroitisch und/oder polarisationsabhängig reflektierende Fläche 57 gekrümmt sein.

### Bezugszeichen

- 10: Endoskop
- 12: Okular des Endoskops 10
- 14: Schaft des Endoskops 10
- 16: Kupplung für Lichtleitkabel 22
- 20: Lichtquelleneinrichtung
- 22: Lichtleitkabel zwischen Lichtquelleneinrichtung 20 und Endoskop 10
- 24: Lichtleiter im Schaft 14
- 30: breitbandige Leuchtdiode
- 40: Laserdiode
- 41: Rand eines von der Laserdiode emittierten Lichtbündels
- 42: Rand eines von der Laserdiode emittierten Lichtbündels
- 45: Zylinderlinse zwischen Laserdiode 40 und Strahlvereinigungseinrichtung 50
- 48: Zylinderachse der Zylinderlinse 45
- 50: Strahlvereinigungseinrichtung
- 51: erster transparenter Körper der Strahlvereinigungseinrichtung 50
- 52: zweiter transparenter Körper der Strahlvereinigungseinrichtung 50
- 54: Mantelfläche der Strahlvereinigungseinrichtung 50
- 56: reflektierende Beschichtung der Mantelfläche 54

- 57: dichroitisch und/oder polarisationsabhängig reflektierende Fläche zwischen dem ersten transparenten Körper 51 und dem zweiten transparenten Körper 52
- 58: Zylinderachse der Strahlvereinigungseinrichtung 50
- 63: Lichteintrittsfläche für Licht der breitbandigen Lichtquelle 30
- 64: Lichteintrittsfläche für Licht der Laserdiode 40
- 65: Lichtaustrittsfläche für Licht sowohl der breitbandigen Leuchtdiode 30 als auch der Laserdiode 40
- 71: Fasertaper
- 72: konzentrischer optischer Konzentrator oder zusammengesetzt parabolischer Konzentrator
- 80: Mischer

## Patentansprüche

1. **Strahlvereinigungseinrichtung** (50) zum Vereinigen von Licht einer ersten Lichtquelle (30) und Licht einer zweiten Lichtquelle (40) einer Lichtquelleneinrichtung (20) für eine medizinische Vorrichtung (10), mit:
einem **Körper** (51, 52) aus einem transparenten Material;
einer zumindest entweder **dichroitisch oder polarisationsabhängig reflektierenden Fläche** (57) in oder an dem Körper (51, 52), die für Licht mit einem ersten Spektrum oder einer ersten Polarisation transparent ist und Licht mit einem zweiten Spektrum oder einer zweiten Polarisation reflektiert, zum Vereinigen von transmittiertem Licht mit dem ersten Spektrum oder der ersten Polarisation von der ersten Lichtquelle (30) und reflektierten Licht mit dem zweiten Spektrum oder der zweiten Polarisation von der zweiten Lichtquelle (40);
einer ersten **Lichteintrittsfläche** (64) an dem Körper (51, 52), die vorgesehen und angeordnet ist, damit Licht durch die Lichteintrittsfläche (64) in die Strahlvereinigungseinrichtung (50) eintritt,
wobei das Licht der zweiten Lichtquelle (40) über die erste Lichteintrittsfläche (64) in die Strahlvereinigungseinrichtung (50) eingekoppelt und an der dichroitisch oder polarisationsabhängig reflektierenden Fläche (57) reflektiert wird,
wobei das Licht der ersten Lichtquelle (30) über eine zweite Lichteintrittsfläche in die Strahlvereinigungseinrichtung (50) eingekoppelt wird,
wobei das Licht der ersten Lichtquelle (30) durch die dichroitisch oder
polarisationsabhängig reflektierende Fläche (57) hindurchtritt,
**dadurch gekennzeichnet, dass**
die erste Lichteintrittsfläche (64) gekrümmt ist und die Gestalt eines Ausschnitts einer Mantelfläche eines Zylinders oder eines Kegels aufweist und
die Mantelfläche (54) des Körpers (51, 52) außerhalb der ersten Lichteintrittsfläche (64) eine reflektierende Beschichtung (56), die innerhalb des Körpers (51, 52) sich ausbreitendes Licht reflektiert, aufweist, und die reflektierende Beschichtung (56) im Bereich der ersten Lichteintrittsfläche (64) eine fensterförmige Öffnung aufweist.

2. Strahlvereinigungseinrichtung (50) nach einem der vorangehenden Ansprüche, bei der der Körper (51, 52) im Wesentlichen die Gestalt eines Abschnitts eines **Zylinders** oder eines **Kegels** aufweist, wobei die dichroitisch oder polarisationsabhängig reflektierende Fläche (57) in oder an dem Körper (51, 52) angeordnet und gegenüber der Mittelachse (58) des Körpers geneigt ist.

3. Strahlvereinigungseinrichtung (50) nach einem der vorangehenden Ansprüche,
wobei die Strahlvereinigungseinrichtung (50) einen **ersten Körper** (51) aus einem transparenten Material und einen **zweiten Körper** (52) aus einem transparenten Material umfasst,
wobei die dichroitisch oder polarisationsabhängig **reflektierende Fläche** (57) zwischen dem ersten Körper (51) und dem zweiten Körper (52) angeordnet ist,
wobei der erste Körper (51) und der zweite Körper (52) zusammen die Gestalt eines Abschnitts eines **Zylinders** oder eines **Kegels** aufweisen.

4. Strahlvereinigungseinrichtung (50) nach einem der vorangehenden Ansprüche, ferner mit:
einem **Fasertaper** (71) oder einem **konzentrischen optischen Konzentrator** (72) oder einem **zusammengesetzt parabolischen Konzentrator** zwischen der zweiten Lichteintrittsfläche und dem Körper (51, 52).

5. Strahlvereinigungseinrichtung (50) nach einem der vorangehenden Ansprüche, ferner mit:
einem **Mischer** (80) zur Homogenisierung der Verteilung von Licht der ersten Lichtquelle (30) und von Licht der zweiten Lichtquelle (40).

6. **Lichtquelleneinrichtung** (20) für eine medizinische Vorrichtung (10), mit:
einer **ersten Lichtquelle** (30) zum Erzeugen von Licht mit einem ersten Spektrum;
einer **zweiten Lichtquelle** (40) zum Erzeugen von Licht mit einem zweiten Spektrum;
einer **Strahlvereinigungseinrichtung** (50) nach einem der vorangehenden Ansprüche.

7. Lichtquelleneinrichtung (20) nach dem vorangehenden Anspruch, bei der der Körper die Gestalt eines Abschnitts eines Zylinders aufweist, bei der die zweite Lichtquelle (40) gegenüber der ersten Lichteintrittsfläche (64) angeordnet und ausgebildet ist, um ein **Lichtbündel** zu emittieren, dessen Divergenz in Richtung senkrecht zur Zylinderachse (58) breiter ist als in Richtung parallel zur Zylinderachse (58).

8. Lichtquelleneinrichtung (20) nach dem vorangehenden Anspruch,
bei der die zweite Lichtquelle ein Laser (40) oder eine andere schmalbandige Lichtquelle ist,
ferner mit: einer **Licht brechenden Einrichtung** (45) zwischen dem Laser (40) oder der anderen schmalbandigen Lichtquelle und der ersten Lichteintrittsfläche (64) der Strahlvereinigungseinrichtung (50), zum Verändern der Divergenz eines von dem Laser (40) oder einer anderen schmalbandigen Lichtquelle erzeugten Lichtbündels.

9. Lichtquelleneinrichtung (20) nach dem vorangehenden Anspruch, bei der die Licht brechende Einrichtung (45) eine **konkave Zylinderlinse** umfasst, die die Divergenz eines von dem Laser oder der anderen schmalbandigen Lichtquelle ausgehenden Lichtbündels in Richtung parallel zur Zylinderachse (58) der ersten Lichteintrittsfläche erhöht.

10. **Medizinische Vorrichtung** (10) mit einer Lichtquelleneinrichtung (20) nach einem der Ansprüche 6 bis 9.

## Claims

1. Beam combining device (50) for combining light from a first light source (30) and light from a second light source (40) of a light-source device (20) for a medical apparatus (10), comprising:
a body (51, 52) made of a transparent material;
a face (57) which reflects in at least either a dichroic or polarization-dependent manner and is situated in or on the body (51, 52), which face is transparent to light having a first spectrum or a first polarization and reflects light having a second spectrum or a second polarization, for combining transmitted light with the first spectrum or the first polarization from the first light source (30) and reflected light with the second spectrum or the second polarization from the second light source (40);
a first light-entrance face (64) on the body (51, 52), which light-entrance face is provided and arranged so that light enters the beam combining device (50) through the light-entrance face (64),
wherein the light of the second light source (40) is coupled into the beam combining device (50) via the first light-entrance face (64) and reflected at the face (57) which reflects in a dichroic or polarization-dependent manner,
wherein the light of the first light source (30) is coupled into the beam combining device (50) via a second light-entrance face, wherein the light of the first light source (30) passes through the face (57) which reflects in a dichroic or polarization-dependent manner,
**characterized in that**
the first light-entrance face (64) is curved and has the form of a section of a lateral face of a cylinder or of a cone and
the lateral face (54) of the body (51, 52) has a reflective coating (56) away from the first light-entrance face (64), said reflective coating reflecting light that propagates within the body (51, 52),
and the reflective coating (56) has a window-shaped opening in the region of the first light-entrance face (64).

2. Beam combining device (50) according to one of the preceding claims, in which the body (51, 52) substantially has the form of a section of a cylinder or of a cone, wherein the face (57) which reflects in a dichroic or polarization-dependent manner is arranged in or on the body (51, 52) and tilted with respect to the center axis (58) of the body.

3. Beam combining device (50) according to one of the preceding claims,
wherein the beam combining device (50) comprises a first body (51) made of a transparent material and a second body (52) made of a transparent material, wherein the face (57) which reflects in a dichroic or polarization-dependent manner is arranged between the first body (51) and the second body (52),
wherein the first body (51) and the second body (52) together have the form of a section of a cylinder or of a cone.

4. Beam combining device (50) according to one of the preceding claims, furthermore comprising:
an optical fiber taper (71) or a concentric optical concentrator (72) or a compound parabolic concentrator between the second light-entrance face and the body (51, 52).

5. Beam combining device (50) according to one of the preceding claims, furthermore comprising:
a mixer (80) for homogenizing the distribution of light from the first light source (30) and light from the second light source (40).

6. Light-source device (20) for a medical apparatus (10), comprising:
a first light source (30) for generating light having a first spectrum;
a second light source (40) for generating light having a second spectrum;
a beam combining device (50) according to one of the preceding claims.

7. Light-source device (20) according to the preceding claim, in which the body has the form of a section of a cylinder, in which the second light source (40) is arranged opposite the first light-entrance face (64) and embodied to emit a light beam, the divergence of which in the direction perpendicular to the cylinder axis (58) is wider than in the direction parallel to the cylinder axis (58).

8. Light-source device (20) according to the preceding claim,
in which the second light source is a laser (40) or another narrow-band light source,
furthermore comprising: a light-refracting device (45) between the laser (40) or the other narrow-band light source and the first light-entrance face (64) of the beam combining device (50), for changing the divergence of a light beam generated by the laser (40) or another narrow-band light source.

9. Light-source device (20) according to the preceding claim, in which the light-refracting device (45) comprises a concave cylindrical lens, which increases the divergence of a light beam, emitted by the laser or the other narrow-band light source, in the direction parallel to the cylinder axis (58) of the first light-entrance face.

10. Medical apparatus (10) comprising a light-source device (20) according to one of Claims 6 to 9.

## Revendications

1. Dispositif de combinaison de faisceaux (50) pour combiner la lumière provenant d'une première source lumineuse (30) et la lumière provenant d'une seconde source lumineuse (40) d'un dispositif médical (10), comprenant :
un corps (51, 52) constitué d'un matériau transparent ;
une surface réfléchissante (57) qui est au moins soit dichroïque soit dépendante de la polarisation dans ou sur le corps (51, 52), qui est transparente à une lumière présentant un premier spectre ou une première polarisation et réfléchit une lumière présentant un second spectre ou une seconde polarisation, pour combiner une lumière transmise présentant le premier spectre ou la première polarisation provenant de la première source lumineuse (30) à une lumière réfléchie présentant le second spectre ou la seconde polarisation provenant de la seconde source lumineuse (40) ;
une première surface d'entrée de lumière (64) sur le corps (51, 52), qui est prévue et agencée pour que la lumière pénètre dans le dispositif de combinaison de faisceaux (50) à travers la surface d'entrée de lumière (64),
dans lequel la lumière provenant de la seconde source lumineuse (40) est injectée dans le dispositif de combinaison de faisceaux (50) par l'intermédiaire de la première surface d'entrée de lumière (64) et est réfléchie sur la surface dichroïque ou dépendant de la polarisation (57),
dans lequel la lumière provenant de la première source lumineuse (30) est injectée dans le dispositif de combinaison de faisceaux (50) par l'intermédiaire d'une seconde surface d'entrée de lumière, dans lequel la lumière provenant de la première source lumineuse (30) passe à travers la surface réfléchissante dichroïque ou dépendant de la polarisation (57),
**caractérisé en ce que** la première surface d'entrée de lumière (64) est incurvée et présente la forme d'une section d'une surface périphérique de cylindre ou de cône, et
**en ce que** la surface périphérique (54) du corps (51, 52) se situant à l'extérieur de la première surface d'entrée de lumière (64) présente un revêtement réfléchissant (56) qui réfléchit la lumière se propageant dans le corps (51, 52), et **en ce que** le revêtement réfléchissant (56) présente une ouverture en forme de fenêtre dans la région de la première surface d'entrée de lumière (64).

2. Dispositif de combinaison de faisceaux (50) selon l'une des revendications précédentes, dans lequel le corps (51, 52) présente sensiblement la forme d'une section de cylindre ou de cône, dans lequel la surface réfléchissante dichroïque ou dépendant de la polarisation (57) est disposée dans ou sur le corps (51, 52) et est inclinée par rapport à l'axe central (58) du corps.

3. Dispositif de combinaison de faisceaux (50) selon l'une des revendications précédentes,
dans lequel le dispositif de combinaison de faisceaux (50) comprend un premier corps (51) constitué d'un matériau transparent et un second corps (52) constitué d'un matériau transparent,
dans lequel la surface réfléchissante dichroïque ou dépendant de la polarisation (57) est disposée entre le premier corps (51) et le second corps (52),
dans lequel le premier corps (51) et le second corps (52) forment ensemble une section de cylindre ou de cône.

4. Dispositif de combinaison de faisceaux (50) selon l'une des revendications précédentes, comportant en outre :
un cône de fibre (71) ou un concentrateur optique concentrique (72) ou un concentrateur parabolique composite entre la seconde surface d'entrée de lumière et le corps (51, 52).

5. Dispositif de combinaison de faisceaux (50) selon l'une des revendications précédentes, comportant en outre :
un mélangeur (80) pour homogénéiser la distribution de la lumière provenant de la première source lumineuse (30) et de la lumière provenant de la seconde source lumineuse (40).

6. Dispositif de source lumineuse (20) pour dispositif médical (10), comportant :
une première source lumineuse (30) pour générer une lumière présentant un premier spectre ;
une seconde source lumineuse (40) pour générer une lumière présentant un second spectre ;
un dispositif de combinaison de faisceaux (50) selon l'une des revendications précédentes.

7. Dispositif de source lumineuse (20) selon la revendication précédente, dans lequel le corps présente la forme d'une section de cylindre, dans lequel la seconde source lumineuse (40) est disposée en face de la première surface d'entrée de lumière (64) et est conçue pour émettre un faisceau lumineux dont la divergence est plus large dans la direction perpendiculaire à l'axe de cylindre (58) que dans la direction parallèle à l'axe de cylindre (58).

8. Dispositif de source lumineuse (20) selon la revendication précédente,
dans lequel la seconde source lumineuse est un laser (40) ou une autre source lumineuse à bande étroite, comportant en outre : un dispositif de réfraction de lumière (45) entre le laser (40) ou l'autre source lumineuse à bande étroite et la première surface d'entrée de lumière (64) du dispositif de combinaison de faisceaux (50), pour faire varier la divergence d'un faisceau lumineux généré par le laser (40) ou par une autre source lumineuse à bande étroite.

9. Dispositif de source lumineuse (20) selon la revendication précédente, dans lequel le dispositif de réfraction de lumière (45) comprend une lentille cylindrique concave qui augmente la divergence d'un faisceau lumineux émanant du laser ou de l'autre source lumineuse à bande étroite dans une direction parallèle à l'axe de cylindre (58) de la première surface d'entrée de lumière.

10. Dispositif médical (10) comportant un dispositif de source lumineuse (20) selon l'une des revendications 6 à 9.
